# EUROPEAN PATENT APPLICATION

(11) **EP 4 657 553 A1**
(43) Date of publication of application: **03.12.2025**
(21) Application number: 24863204.4
(22) Date of filing: 05.09.2024
(51) Int. Cl.: H01M 4/1395, H01M 4/38, H01M 4/36, H01M 4/583, H01M 4/62, H01M 4/134, H01M 10/052, H01M 4/02

(54) **ANODE SLURRY PREPARATION METHOD AND APPARATUS, ANODE SLURRY, ANODE AND LITHIUM SECONDARY BATTERY**

(30) Priority: 07.09.2023 KR 20230118844
(71) Applicant: LG Energy Solution, Ltd., Seoul 07335 (KR)
(72) Inventor: LEE, Jaewook, Daejeon 34122 (KR); KO, Minjin, Daejeon 34122 (KR); KWON, Yohan, Daejeon 34122 (KR)
(74) Representative: Hoffmann Eitle
(86) International application number: PCT/KR2024/013376
(87) International publication number: WO 2025/053625

(57) **Abstract**

The present application relates to a method for preparing a negative electrode slurry, the method including the following steps: mixing a negative electrode active material, a conductive material, a (meth)acrylic binder, and a first solvent to form a mixture; measuring an initial pH of the mixture; adjusting the pH of the mixture to within a target pH region by adding a second solvent containing a pH adjuster, when the initial pH is outside the target pH region; and obtaining a mixture having a pH within the target pH region. Accordingly, an effect of reducing the risk of explosion by preventing hydrogen gas from being generated without damaging the constituent components of the negative electrode slurry is provided.

## Description

### [Technical Field]

The present application relates to a method and apparatus for preparing a negative electrode slurry, a negative electrode slurry, a negative electrode, and a lithium secondary battery.

### <Cross-Reference to Related Applications>

This application claims priority to and the benefit of Korean Patent Application No. 10-2023-0118844 filed in the Korean Intellectual Property Office on September 7, 2023, the entire contents of which are incorporated herein by reference.

### [Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and deintercalating lithium ions from the positive electrode, and as the negative electrode active material, a silicon-based particle having high discharge capacity may be used.

In particular, recently, in response to the demand for a high-density energy battery, studies have been actively conducted on a method for increasing the capacity by together using a silicon-based compound such as Si/C or SiOx, which has a 10-fold higher capacity than a graphite-based material, as a negative electrode active material. Although silicon-based compounds, which are high-capacity materials, provide an advantage of having large capacity when compared to graphite, which is used in the related art, there is a problem in that hydrogen gas may be generated due to surface oxidation reactions during the preparation and storage of silicon-based compound-containing electrode compositions or slurries, resulting in explosion risk and reduction in phase stability.

Therefore, in order to ameliorate the above-described problems, there is a need for research into the manufacture of a negative electrode including a silicon-based compound while maintaining the physical properties expected from the constituent components of a battery.

### [Detailed Description of the Invention]

### [Technical Problem]

To solve the problems, the present application has been made in an effort to provide a method and apparatus for preparing a negative electrode slurry in which the contents of constituent components of the negative electrode slurry (particularly, a second solvent including a pH adjuster) are adjusted such that the concentration of hydrogen ions (pH) is controlled, as well as a negative electrode slurry, a negative electrode, and a lithium secondary battery.

### [Technical Solution]

An exemplary embodiment of the present specification provides a method for preparing a negative electrode slurry, the method including: mixing a negative electrode active material, a conductive material, a (meth)acrylic binder, and a first solvent to form a mixture; measuring an initial pH of the mixture; adjusting the pH of the mixture to within a target pH region of pH 5 or more and pH 7.5 or less, by adding a second solvent containing a pH adjuster, when the initial pH is outside the target pH region; and obtaining a negative electrode slurry having a pH within the target pH region.

Another exemplary embodiment provides an apparatus for preparing a negative electrode slurry, the apparatus including: a supplying member supplying a negative electrode active material, a conductive material, a (meth)acrylic binder, and a first solvent; a mixing member mixing the negative active material, the conductive material, the (meth)acrylic binder, and the first solvent to form a mixture; a pH measuring member measuring an initial pH of the mixture; a calculating member determining whether the initial pH falls within a target pH region of pH 5 or more and pH 7.5 or less; a controlling member adjusting the pH of the mixture to within the target pH region by adding a second solvent containing a pH adjuster, when the initial pH is outside the target pH region; and a discharging member discharging the negative electrode slurry having a pH within the target pH region.

Still another exemplary embodiment provides a negative electrode slurry prepared by the method for preparing a negative electrode slurry.

Yet another exemplary embodiment provides a negative electrode including: a negative electrode current collector layer; and a negative electrode active material layer in which the negative electrode slurry is applied on one surface or both surfaces of the negative electrode current collector layer.

Finally, provided is a lithium secondary battery including: a first electrode; a second electrode; a separator provided between the first electrode and the second electrode; and an electrolyte, in which any one of the first electrode or second electrode is the negative electrode.

### [Advantageous Effects]

A method and apparatus for preparing a negative electrode slurry, a negative electrode slurry, a negative electrode, and a lithium secondary battery according to an exemplary embodiment of the present disclosure are characterized in that the pH is allowed to fall within a target pH range by controlling the contents of constituent components of the negative electrode slurry (particularly, a solvent including a pH adjuster), thereby having effects of preventing the generation of hydrogen gas due to a surface oxidation reaction during preparation or storage of the negative electrode slurry and effectively maintaining physical properties expected from the constituent components of the negative electrode slurry.

Further, since the negative electrode slurry according to an exemplary embodiment of the present disclosure prevents hydrogen gas from being generated, the process stability, safety, and the like can be further secured in the future.

### [Brief Description of Drawings]

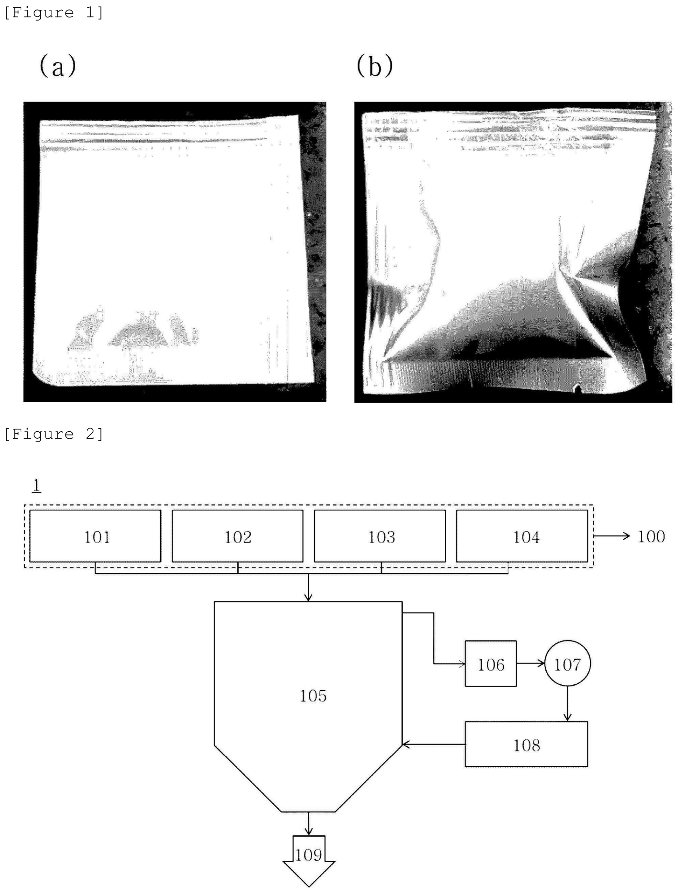

The left side (A) of FIG. 1 is a photograph taken of a negative electrode slurry prepared according to an exemplary embodiment of the present disclosure (Example 1) after the negative electrode slurry was left to stand in a constant temperature chamber at 60°C for 24 hours, and the right side (B) is a photograph taken of a comparative negative electrode slurry (Comparative Example 1) under the same conditions.

FIG. 2 is a schematic view of an apparatus for preparing a negative electrode slurry according to an exemplary embodiment of the present disclosure.
1: Apparatus for preparing negative electrode slurry
100: Supplying member
101: Member for supplying negative electrode active material
102: Member for supplying conductive material
103: Member for supplying (meth)acrylic binder
104: Member for supplying first solvent
105: Mixing member
106: pH Measuring member
107: Calculating member
108: Controlling member
109: Discharging member

### [Best Mode]

Prior to the description of the present disclosure, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less' including p and q.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present disclosure will be described in detail with reference to drawings, such that a person with ordinary skill in the art to which the present disclosure pertains can easily carry out the present disclosure. However, the present disclosure can be implemented in various different forms, and is not limited to the following description.

### <Method for preparing negative electrode slurry>

The method for preparing a negative electrode slurry according to an exemplary embodiment of the present specification is characterized by achieving a target pH by adding and mixing a second solvent to adjust the content thereof when an initial pH of a mixture of a negative electrode active material, a conductive material, a (meth)acrylic binder, and a first solvent (not including a pH adjuster) does not fall within a target pH region.

The method for preparing a negative electrode slurry according to the exemplary embodiment may provide an effect of reducing the amount of hydrogen gas generated by a surface oxidation reaction during preparation and storage of the negative electrode slurry, without impairing physical properties expected from a negative electrode active material, a conductive material, a (meth)acrylic binder, and a first solvent itself, by adjusting the content of a solvent including a pH adjuster, and may ultimately ensure the stability of a battery.

The target pH region may mean a threshold for minimizing the amount of hydrogen gas generated from a surface oxidation reaction, such that the hydrogen gas does not directly or indirectly affect an explosion, at least during the preparation process of the negative electrode slurry and/or when the negative electrode slurry is stored for about 2 to 3 days immediately after preparation. In some cases, the target pH region may vary depending on the type and content of the solvent and pH adjuster included in the negative electrode slurry, but the upper and lower limits according to this are within the above-described target pH region.

In an exemplary embodiment of the present specification, the negative electrode active material may include a silicon-based active material.

In the present specification, the silicon-based active material has a 10-fold higher capacity than the carbon-based active material, and accordingly, when the silicon-based active material is applied to an electrode, particularly a negative electrode, it is possible to implement an electrode with a higher level of energy density even with a thinner thickness than when the carbon-based active material is included alone.

In an exemplary embodiment of the present specification, the negative electrode active material may further include a carbon-based active material in addition to the silicon-based active material.

According to the exemplary embodiment, the negative electrode active material is composed of a mixture of a silicon-based active material and a carbon-based active material, so that the degree of volume expansion of the active material may be further controlled.

In an exemplary embodiment of the present specification, when the negative electrode active material is composed of a silicon-based active material and a carbon-based active material, the composition ratio between the silicon-based active material and the carbon-based active material may be in a range of 2 : 98 to 30 : 70.

According to the exemplary embodiment, the negative electrode active material includes a carbon-based active material as a main component compared to a silicon-based active material, and thus may further provide an effect in which swelling slightly occurs due to the small volume expansion of the active material during charging and discharging and the conductive connectivity of the negative electrode is excellent.

In an exemplary embodiment of the present specification, the content of the negative electrode active material may be 60 parts by weight or more and 96 parts by weight or less, based on 100 parts by weight of the sum of the negative electrode active material, the conductive material, and the (meth)acrylic binder.

In another exemplary embodiment, the content of the negative electrode active material may be 60 parts by weight or more, preferably 65 parts by weight or more, and more preferably 70 parts by weight or more, or 96 parts by weight or less, preferably 90 parts by weight or less, based on 100 parts by weight of the sum of the negative electrode active material, the conductive material, and the (meth)acrylic binder.

When the above range of the negative electrode active material is satisfied, excellent output characteristics may be ensured during charging and discharging without degrading the performance of the negative electrode during the charging and discharging process in the future.

In an exemplary embodiment of the present specification, the silicon-based active material may include one or more selected from the group consisting of SiOx (x=0), SiOx (0<x<2), and a Si/C composite material.

In the present specification, the silicon-based active material may be present, for example, in a crystalline or amorphous form. Specifically, the silicon particles of the silicon-based active material may be preferably spherical particles, but are not limited thereto.

In the present specification, the case of SiO₂ where x is 2 in the SiOx is not included, but this SiO₂ does not react with lithium ions, and thus cannot store lithium. Therefore, it is preferred that x falls within the range of the exemplary embodiment.

In the present specification, the silicon-based active material may be Si/C composed of a composite of Si and C, or Si.

In the present specification, two or more of the silicon-based active materials may be used in mixture.

In an exemplary embodiment of the present specification, the carbon-based active material may include one or more selected from the group consisting of artificial graphite, natural graphite, hard carbon, and soft carbon.

In the present specification, the conductive material may be referred to as a negative electrode conductive material.

In the present specification, the negative electrode conductive material is applied to the negative electrode, and has a completely different configuration from a positive electrode conductive material applied to the positive electrode. That is, the negative electrode conductive material serves to capture a contact point between silicon-based active materials in which the volume expansion of the electrode is very large due to charging and discharging, whereas the positive electrode conductive material serves to impart partial conductivity while playing a buffer role as a cushioning role when roll-pressed, so that the negative electrode conductive material and the positive electrode conductive material have different structures and roles.

In an exemplary embodiment of the present specification, the content of the conductive material may be 0.01 parts by weight or more and 40 parts by weight or less, based on 100 parts by weight of the sum of the negative electrode active material, the conductive material, and the (meth)acrylic binder.

In another exemplary embodiment, the content of the conductive material may be 0.01 parts by weight or more, preferably 0.03 parts by weight or more, and more preferably 0.5 parts by weight or more, or 40 parts by weight or less, preferably 30 parts by weight or less, and more preferably 25 parts by weight or less, based on 100 parts by weight of the sum of the negative electrode active material, the conductive material, and the (meth)acrylic binder.

In an exemplary embodiment of the present specification, the conductive material may include one or more selected from the group consisting of a dotted conductive material; a planar conductive material; and a linear conductive material.

In an exemplary embodiment of the present specification, the conductive material may include a dotted conductive material and a linear conductive material.

In the present specification, the dotted conductive material may be used to enhance the conductivity of the negative electrode, and means a dot or sphere-shaped conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black and/or artificial graphite in terms of implementing high conductivity and being excellent in dispersibility.

In the present specification, the planar conductive material may increase the surface contact between silicon particles in the negative electrode to improve conductivity and simultaneously suppress the disconnection of the conductive path due to the volume expansion. The planar conductive material may be expressed as a plate-like conductive material or a bulk conductive material. Examples of the planar conductive material may include at least one selected from the group consisting of plate-like graphite, graphene, graphene oxide, and graphite flake, and may be preferably plate-like graphite.

In the present specification, the linear conductive material may be carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side in an alignment where longitudinal axes of the carbon nanotube units are substantially the same or intertwined. In the carbon nanotube unit, a graphite sheet has a cylindrical shape with a nano-sized diameter and has an sp² bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In the present specification, the (meth)acrylic binder may mean a water-based binder.

In an exemplary embodiment of the present specification, the content of the (meth)acrylic binder may be 2 parts by weight or more and 30 parts by weight or less, based on 100 parts by weight of the sum of the negative electrode active material, the conductive material, and the (meth)acrylic binder.

In the present specification, the negative electrode active material, the conductive material, and the (meth)acrylic binder may be referred to as a negative electrode composition.

In another exemplary embodiment, the content of the (meth)acrylic binder may be 30 parts by weight or more, preferably 25 parts by weight or less, and more preferably 20 parts by weight or less, or 2 parts by weight or more, preferably 5 parts by weight or more, and more preferably 10 parts by weight or more, based on 100 parts by weight of the sum of the negative electrode active material, the conductive material, and the (meth)acrylic binder.

In an exemplary embodiment of the present specification, the (meth)acrylic binder may have a weight average molecular weight of 100,000 g/mol or more and 1,500,000 g/mol or less.

When the weight average molecular weight of the (meth)acrylic binder satisfies the above range, the electrode has excellent adhesion strength characteristics because the mechanical strength is excellent and the interaction between molecules is high. In addition, when the above range is satisfied, the viscosity of the (meth)acrylic binder may be selected within an appropriate range, so that when a negative electrode is manufactured using the same, the coatability of the electrode may be further improved.

In an exemplary embodiment of the present specification, the (meth)acrylic binder may be a polymer including one or more monomers selected from the group consisting of poly(meth)acrylic acid, poly(meth)acrylonitrile, and poly(meth)acrylamide.

The polymer may be a homopolymer composed of one type of monomer as a repeating unit, or a copolymer including two or more different types of monomers as repeating units.

In the present specification, a polymerization initiator is used to prepare the (meth)acrylic binder, and ammonium persulfate may be used as an example of the polymerization initiator, but the polymerization initiator is not limited thereto.

In the present specification, the fact that the (meth)acrylic binder includes a plurality of compounds having a specific ratio (represented by parts by weight or weight ratio) may mean that each compound (for example: (meth)acrylamide, (meth)acrylic acid, and (meth)acrylonitrile) is included as a monomer for the (meth)acrylic binder polymer.

In the present specification, the (meth)acrylic binder includes a plurality of compounds as monomers, and the monomer containing the largest content is regarded as a representative, and thus, may be named a "monomer"-based compound.

In the present specification, the "(meth)acryl..." may mean methacryl and/or (meth)acryl.

In the present specification, when the (meth)acrylic binder is a copolymer including two or more types of monomers as repeating units, the proportion of each monomer is not particularly limited as long as it belongs to the (meth)acrylic binder.

In the present specification, the copolymer may be a random copolymer, a graft copolymer, a block copolymer, and the like, but is not particularly limited.

In some cases, when the viscosity of the electrode slurry is controlled within a suitable range by appropriately adjusting the average particle diameter (D50) of the silicon-based active material or the specific surface area of the particles, the dispersion of negative electrode slurry constituent components (for example: a conductive material, a (meth)acrylic binder, a silicon-based active material, a carbon-based active material, and the like) may be improved. Accordingly, the contact area between the constituent components is improved, so that the conductive network may be maintained, the capacity retention rate may be increased, and the current density non-uniformity phenomenon during charging/discharging may also be prevented.

In some cases, the viscosity of the negative electrode slurry may be adjusted so as to be 2,000 cPs or more and 50,000 cPs or less.

When the negative electrode slurry satisfies the above viscosity range, storability is excellent, and when one surface or both sides of the negative electrode current collector layer is or are coated with the negative electrode slurry in the future, coatability may be further improved.

### <Apparatus for preparing negative electrode slurry>

According to FIG. 3 , an apparatus (1) for preparing a negative electrode slurry according to an exemplary embodiment of the present specification includes the supplying member 100, the mixing member 105, the pH measuring member 106, the calculating member 107, the controlling member 108, and the discharging member 109, and is characterized in that the calculating member determines whether the pH falls within a target pH region (pH 5 or more and pH 7.5 or less), and the controlling member adjusts the content of a second solvent (including a pH adjuster) when the initial pH does not fall within the target pH.

An exemplary embodiment of the present disclosure may further include a monitoring member capable of confirming in real time whether the pH falls within the target pH region.

An exemplary embodiment of the present specification may further include a member which stores a difference between an initial pH and a target pH region measured according to the type and content of the solvent and pH, respectively, and accordingly stores the result of subsequent addition and mixing through a controlling member to perform machine learning in a direction of eliminating or reducing the difference between the initial pH and the target pH region from the supplying member when applied to a process in the future.

In the present specification, the supplying member means a supplying member publicly known in the art as long as the objects to be supplied (for example, a negative electrode active material 101, a conductive material 102, a (meth)acrylic binder 103, and a first solvent 104) are supplied to the desired locations at the desired contents without loss, and is not particularly limited.

In the present specification, the mixing member means a mixing member publicly known in the art, as long as the objects to be mixed (a negative electrode active material, a conductive material, a (meth)acrylic binder, and a first solvent) are uniformly mixed, and is not particularly limited.

In the present specification, the pH measuring member means a pH measuring device publicly known in the art, as long as the pH of an object to be measured (a (uniform) mixture of a negative electrode active material, a conductive material, a (meth)acrylic binder, and a first solvent) is accurately measured, and is not particularly limited.

In the present specification, the calculating member refers to a calculating member publicly known in the art, as long as an object to be calculated (the difference between the initial pH of the mixture and the target pH region), and is not particularly limited.

In the present specification, the controlling member means a controlling member publicly known in the art, as long as an object to be controlled (second solvent) can be precisely adjusted, and is not particularly limited.

In the present specification, the discharging member means a discharging member publicly known in the art as long as an object to be discharged (a mixture or negative electrode slurry falling within a target pH region) can be discharged, and is not particularly limited.

In an exemplary embodiment of the present disclosure, the target pH region may be pH 5 or more and pH 7.5 or less.

In the present specification, the contents described above may be applied to the contents on the negative electrode slurry, the negative electrode active material, the conductive material, the (meth)acrylic binder, the solvent, and the target pH region.

### <Negative electrode slurry>

Another exemplary embodiment of the present disclosure provides a negative electrode slurry prepared by the method for preparing a negative electrode slurry.

Since the above-described method for preparing a negative electrode slurry is applied as it is to the negative electrode slurry according to the present disclosure, the content on the method for preparing a negative electrode slurry may be applied as it is to the negative electrode slurry obtained accordingly.

### <Negative electrode>

Still another exemplary embodiment of the present disclosure provides a negative electrode including: a negative electrode current collector layer; and a negative electrode active material layer in which the above-described negative electrode slurry is applied on one surface or both surfaces of the negative electrode current collector layer.

Since the above-described negative electrode slurry is used as it is in the negative electrode according to the exemplary embodiment, the above-described contents on the negative electrode slurry may be applied as it is.

In the present specification, the negative electrode current collector layer generally has a thickness of 1 µm to 100 µm. The negative electrode current collector layer is not particularly limited as long as the negative electrode current collector layer has high conductivity without causing a chemical change in the battery, and for example, it is possible to use copper, stainless steel, aluminum, nickel, titanium, fired carbon, copper or stainless steel of which the surface is treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 µm or more and 100 µm or less, and the negative electrode active material layer has a thickness of 20 µm or more and 500 µm or less.

However, the thickness may be variously modified depending on the type and use of the negative electrode used, and is not limited thereto.

### <Lithium secondary battery>

In an exemplary embodiment of the present disclosure, provided is a lithium ion secondary battery including: a first electrode; a second electrode; a separator provided between the first electrode and the second electrode; and an electrolyte, in which any one of the first electrode or the second electrode is the above-described negative electrode.

Since the negative electrode is included as it is in the lithium secondary battery according to the exemplary embodiment, the contents on the negative electrode may be applied as it is.

In the present specification, the first electrode may be a negative electrode, and the second electrode may be a positive electrode.

In the present specification, the first electrode may be a positive electrode, and the second electrode may be a negative electrode.

Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change in the battery, and for example, it is possible to use stainless steel, aluminum, nickel, titanium, fired carbon, or aluminum or stainless steel of which the surface is treated with carbon, nickel, titanium, silver, and the like. Further, the positive electrode current collector may typically have a thickness of 3 µm to 500 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode (meth)acrylic binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode (meth)acrylic binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, poly(meth)acrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone (NMP), propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present disclosure provides a battery module including the secondary battery as a unit cell and a battery pack including the same. The battery module and the battery pack include the secondary battery which has high capacity, high rate-limiting properties, and cycle properties, and thus, may be used as a power source of a medium-and-large sized device selected from the group consisting of an electric vehicle, a hybrid electric vehicle, a plug-in hybrid electric vehicle, and a power storage system.

Hereinafter, preferred embodiments will be suggested to facilitate understanding of the present disclosure, but the embodiments are only provided to illustrate the present disclosure, and it is apparent to those skilled in the art that various alterations and modifications are possible within the scope and technical spirit of the present disclosure, and it is natural that such alterations and modifications also fall within the accompanying claims. Preparation Examples. Preparation of (meth)acrylic binder

### <Preparation Example 1>

In a reactor equipped with a stirrer, a thermometer, a reflux condenser, and a nitrogen gas inlet pipe, (meth)acrylamide (50% aqueous solution) and acrylic acid (AA, 80% aqueous solution) were mixed as monomers at a molar ratio of 6:4, and a polymerization initiator (ammonium persolvate) was added in an amount of 0.1 parts by weight with respect to 100 parts by weight of the sum of the total monomers, and the resulting mixture was reacted at 80°C for 6 hours to prepare a polymer in an aqueous solution state.

Next, a (meth)acrylic binder with a pH of 7.9 was prepared by adding a 0.1 molar NaOH aqueous solution dropwise to the polymer in the aqueous solution state for neutralization.

### <Preparation Example 2>

A (meth) acrylic binder was prepared in the same manner as in Preparation Example 1, except that a (meth)acrylic binder with a pH of 6.6 was prepared by adding a 0.1 molar NaOH aqueous solution dropwise in the neutralization step.

### <Preparation Example 3>

Acrylic acid (AA, 80% aqueous solution) was used alone as a monomer to prepare a polymer and prepare a (meth)acrylic binder with a pH of 2.1.

### Examples. Preparation of negative electrode slurry

### <Example 1>

Artificial graphite with D50 = 10 µm and Si with D50 = 6 µm were used as negative electrode active materials, two types of carbon black (product name: SuperC45, Timcal Corporation) and SWCNT (product name: Tuball, OCSiAl) were used as conductive materials, and the (meth)acrylic binder of Preparation Example 1 was used as a (meth)acrylic binder to mix the components with a ratio of graphite:Si:C45:SWCNT: (meth)acrylic binder = 81:12:1.8:0.2:5, thereby preparing Mixture 1.

A 0.03 M aqueous phosphoric acid solution (pH = 1.93) was added to Mixture 1 (initial pH = 8.4) until the target pH reached 6.7, and the resulting mixture was stirred to prepare a negative electrode slurry.

### <Example 2>

Artificial graphite with D50 = 10 µm and Si/C with D50 = 6 µm were used as negative electrode active materials, two types of carbon black (product name: SuperC45, Timcal Corporation) and SWCNT (product name: Tuball, OCSiAl) were used as conductive materials, and the (meth)acrylic binder of Preparation Example 2 was used as a (meth)acrylic binder to mix the components with a ratio of graphite:Si/C:C45:SWCNT: (meth)acrylic binder = 79:12:1.9:0.1:7, thereby preparing Mixture 2.

A 0.03 M aqueous phosphoric acid solution (pH = 1.93) was added to Mixture 2 (initial pH = 7.8) until the target pH reached 5.4, and the resulting mixture was stirred to prepare a negative electrode slurry.

### <Example 3>

Artificial graphite with D50 = 10 µm and SiOx (0<x<2) with D50 = 6 µm were used as negative electrode active materials, two types of carbon black (product name: SuperC45, Timcal Corporation) and SWCNT (product name: Tuball, OCSiAl) were used as conductive materials, and the (meth)acrylic binder of Preparation Example 3 was used as a (meth)acrylic binder to mix the components with a ratio of graphite:Si:C45:SWCNT: (meth)acrylic binder = 81:10:1.9:0.1:7, thereby preparing Mixture 3.

A 0.1 M aqueous sulfuric acid solution (pH = 0.7) was added to Mixture 3 (initial pH = 9.3) until the target pH reached 7.1, and the resulting mixture was stirred to prepare a negative electrode slurry.

### <Comparative Example 1>

A negative electrode slurry was prepared in the same manner as in Example 1, except that Mixture 1 (not subjected to adjusting the pH to a target pH, that is, initial pH = 8.4) was used.

### <Comparative Example 2>

A negative electrode slurry was prepared in the same manner as in Example 2, except that Mixture 2 (not subjected to adjusting the pH to a target pH, that is, initial pH = 7.8) was used.

### <Comparative Example 3>

A negative electrode slurry was prepared in the same manner as in Example 3, except that Mixture 3 (not subjected to adjusting the pH to a target pH, that is, initial pH = 9.3) was used.

### Experimental Examples.

### <Experimental Example 1: Measurement of amount of H₂ gas generated in negative electrode slurry>

5 g of each of the negative electrode slurries of Examples 1 to 3 and Comparative Examples 1 to 3 were put into a pouch having a size of 9 cm x 9 cm, and the pouches were sealed.

Then, the sealed pouch was left to stand in a constant temperature chamber at 60°C for 24 hours. After being left to stand under the above conditions, the pouch including the negative electrode slurry of Example 1 (a) and the pouch including the negative electrode slurry of Comparative Example 1 (b) are as shown in the photograph of FIG. 1.

Then, the gas generated in the pouch was captured, and the amount of H₂ gas generated was quantitatively analyzed using GC/MS. The measurement results are shown in the following Table 1.

### <Experimental Example 2: Battery manufacturing and battery characteristic evaluation (initial efficiency and capacity retention rate)>

A copper foil with a thickness of 18 µm was coated with each of the negative electrode slurry and dried, a negative electrode active material layer with a thickness of 50 µm was formed on one surface of the copper foil, and the copper foil was punched into circular shapes with a diameter of 14 Φ (mm) to manufacture a test electrode (negative electrode). A metal lithium foil with a thickness of 0.3 mm was used as a positive electrode. A porous polyethylene sheet with a thickness of 0.1 mm was used as a separator. In addition, an electrolytic solution in which LiPF₆ as a lithium salt was dissolved at a concentration of about 1 mol/L in a mixed solvent of ethylene carbonate (EC) and diethyl carbonate (DEC) at a volume ratio of 1 : 1 was used as an electrolytic solution.

A coin cell for evaluation with a thickness of 2 mm and a diameter of 32 mm was manufactured by sealing the negative electrode, the positive electrode, the separator, and the electrolytic solution in a stainless steel container. The coin cell was charged with a constant current of 0.05 C until the voltage reached 0.01 V, and discharged with a constant current of 0.05 C until the voltage reached 1.5 V to determine the discharge capacity and initial efficiency, and thereafter, a capacity retention rate test was performed in the same voltage range as above at a constant current of 0.2 C for the cycle characteristics, and the results are shown in the following Table 1.

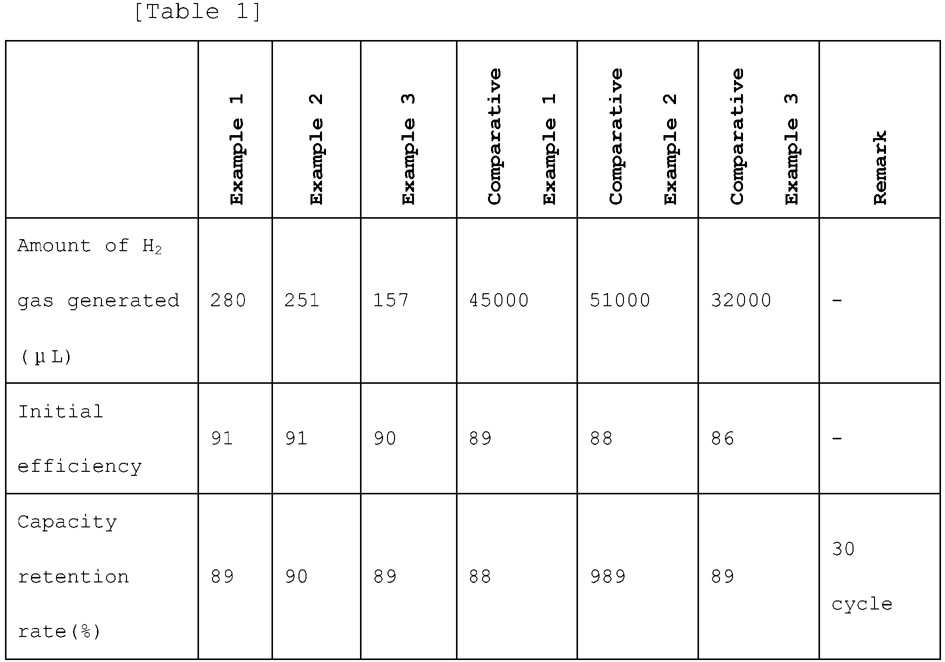

As shown in the results of Table 1, the negative electrode slurries of Examples 1 to 3, in which the pH was controlled within the target pH range in the slurry preparation step, and lithium secondary batteries using the negative electrode slurries generated less hydrogen gas and had excellent initial efficiencies and cycle capacity retention rates.

In contrast, although the negative electrode slurries of Comparative Examples 1 to 3, in which the pH was not controlled within the target pH range, and lithium secondary batteries using the negative electrode slurries have appropriate initial efficiencies and capacity retention rates, the amount of hydrogen gas generated is at least 150-fold higher than those of the Examples, so that it can be determined that there is a high risk of explosion.

## Claims

1. A method for preparing a negative electrode slurry, the method comprising:
mixing a negative electrode active material, a conductive material, a (meth)acrylic binder, and a first solvent to form a mixture;
measuring an initial pH of the mixture;
adjusting the pH of the mixture to within a target pH region of pH 5 or more and pH 7.5 or less, by adding a second solvent containing a pH adjuster, when the initial pH is outside the target pH region; and
obtaining a negative electrode slurry having a pH within the target pH region.

2. The method of claim 1, wherein the negative electrode active material is included in an amount of 60 parts by weight or more and 96 parts by weight or less, based on 100 parts by weight of the sum of the negative electrode active material, the conductive material, and the (meth)acrylic binder.

3. The method of claim 1, wherein the negative electrode active material comprises a silicon-based active material.

4. The method of claim 3, wherein the silicon-based active material comprises one or more selected from the group consisting of SiOx, wherein x=0, SiOx, wherein 0<x<2, and a Si/C composite material.

5. The method of claim 3, wherein the negative electrode active material further comprises a carbon-based active material.

6. The method of claim 5, wherein the carbon-based active material further comprises one or more selected from the group consisting of artificial graphite, natural graphite, hard carbon, and soft carbon.

7. The method of claim 1, wherein the conductive material is included in an amount of 0.01 parts by weight or more and 40 parts by weight or less, based on 100 parts by weight of the sum of the negative electrode active material, the conductive material, and the (meth)acrylic binder.

8. The method of claim 1, wherein the conductive material comprises one or more selected from the group consisting of a dotted conductive material, a planar conductive material, and a linear conductive material.

9. The method of claim 1, wherein the (meth)acrylic binder is included in an amount of 2 parts by weight or more and 30 parts by weight or less, based on 100 parts by weight of the sum of the negative electrode active material, the conductive material, and the (meth)acrylic binder.

10. The method of claim 1, wherein the (meth)acrylic binder has a weight average molecular weight of 100,000 g/mol or more and 1,500,000 g/mol or less.

11. The method of claim 1, wherein the (meth)acrylic binder is a homopolymer or copolymer selected from the group consisting of poly(meth)acrylic acid, poly(meth)acrylonitrile, and poly(meth)acrylamide.

12. An apparatus for preparing a negative electrode slurry, the apparatus comprising:
a supplying member supplying a negative electrode active material, a conductive material, a (meth)acrylic binder, and a first solvent;
a mixing member mixing the negative electrode active material, the conductive material, the (meth)acrylic binder, and the first solvent to form a mixture;
a pH measuring member measuring an initial pH of the mixture;
a calculating member determining whether the initial pH falls within a target pH region of pH 5 or more and pH 7.5 or less;
a controlling member adjusting the pH of the mixture to within the target pH region by adding a second solvent containing a pH adjuster, when the initial pH is outside the target pH region; and
a discharging member discharging the negative electrode slurry having a pH within the target pH region.

13. A negative electrode slurry prepared by the method of any one of claims 1 to 11.

14. A negative electrode comprising:
a negative electrode current collector layer; and
a negative electrode active material layer in which the negative electrode slurry according to claim 13 is applied on one surface or both surfaces of the negative electrode current collector layer.

15. A lithium secondary battery comprising:
a first electrode;
a second electrode;
a separator provided between the first electrode and the second electrode; and
an electrolyte,
wherein any one of the first electrode or second electrode is the negative electrode according to claim 14.
